# EUROPÄISCHE PATENTSCHRIFT

(11) **EP 1 311 640 B1**
(45) Veröffentlichungstag und Bekanntmachung des Hinweises auf die Patenterteilung: **21.09.2005**
(21) Anmeldenummer: 01956587.8
(22) Anmeldetag: 07.08.2001
(51) Int. Cl.: C09J 7/02, C09J 7/04

(54) **KLEBEBÄNDER MIT TEXTILEM TRÄGER FÜR DIE UMMANTELUNG VON LANGGESTRECKTEM GUT, WIE INSBESONDERE KABELSÄTZEN**
ADHESIVE TAPES COMPRISING A TEXTILE SUPPORT FOR ENVELOPING ELONGATED MATERIAL, PARTICULARLY LOOMS OF CABLES
BANDES ADHESIVES A SUPPORT TEXTILE DESTINEES A RECOUVRIR DES PRODUITS ALLONGES TELS QUE DES FAISCEAUX DE CABLES NOTAMMENT

(30) Priorität: 16.08.2000 DE 10039982
(43) Veröffentlichungstag der Anmeldung: 21.05.2003
(73) Patentinhaber: tesa AG, 20253 Hamburg (DE)
(72) Erfinder: KÜLPER, Klaus, 25421 Pinneberg (DE)
(86) Internationale Anmeldenummer: PCT/EP2001/009091
(87) Internationale Veröffentlichungsnummer: WO 2002/014446

(56) Entgegenhaltungen:
- EP-A- 0 716 136
- EP-A- 0 942 057
- EP-A- 0 995 782
- EP-A- 0 995 783
- EP-A- 1 114 853
- DE-A- 4 442 507

## Beschreibung

Die Erfindung bezieht sich auf Klebebänder mit textilem Träger, die besonders zur Ummantelung von langgestrecktem Gut, wie insbesondere Kabelsätzen, geeignet sind.

Im modernen Fahrzeugbau werden die Kabelbäume einerseits immer voluminöser und dicker durch die Vielzahl der elektrischen Verbraucher und dem vermehrten Informationstransfer innerhalb der Fahrzeuge, während andererseits der Verbauraum immer stärker eingeengt und somit die Durchführungsmöglichkeiten beim Verlegen in der Karosserie problematischer werden.

Parallel dazu steigen Anforderungen und Ansprüche an den Komfort. Klappergeräusche durch Kabelbäume insbesondere im Fahrzeuginnenraum sind zu vermeiden, und eine möglichst effektive Geräuschdämpfung wird angestrebt

Des weiteren wird für eine effiziente und kostengünstige Kabelbaumherstellung von den Kabelwickelbändern eine leichte und schnelle Verarbeitbarkeit erwartet.

Klebebänder auf Basis von Weich-PVC-Folien werden in Automobilen zur Bandagierung von elektrischen Leitungen zu Kabelbäumen eingesetzt. Stand in den Anfängen die Verbesserung der elektrischen Isolation bei Verwendung dieser ursprünglich als Isolierbänder entwickelten Klebebänder im Vordergrund, müssen derartige Kabelsatz-Klebebänder mittlerweile weitere Funktionen erfüllen, wie die Bündelung und dauerhafte Fixierung einer Vielzahl von Einzelkabeln zu einem stabilen Kabelstrang, den Schutz der Einzelkabel gegen mechanische, thermische und chemische Attacken.

Während PVC-Folienklebebänder den Schutz gegen Betriebsmittel wie Kraftstoffe, Öle, Kühlerflüssigkeiten etc., wie sie typischerweise im Fahrzeug, besonders im Motorraum, auftreten können, in hohem Umfang erfüllen und wegen ihrer materialbedingten Schwerentflammbarkeit vorteilhaft sind, ist jedoch die Abrieb- und Scheuerbeständigkeit derartiger PVC-Folienklebebänder in vielen Fällen zu gering.
Des weiteren erfüllen PVC-Folienklebebänder die gestiegenen Anforderungen in Hinblick auf die Temperaturbeständigkeit sowie Schalldämpfung und Klapperschutz nicht oder zumindest in zu geringem Umfang.

Durch leistungsstärkere Motoren und immer dichtere Verbauweise der Komponenten werden an die Kabelsatzbänder erhöhte Anforderungen gestellt, die sich in Dauerbeständigkeiten über 3000 h für 125 °C und höher (allgemeine Prüfmethode zum Beispiel bei der Firma Ford) niederschlagen, was für Weich-PVC nur in Ausnahmefällen bei besonderer und aufwendiger Rezeptierung überhaupt erreichbar ist.

Die Tendenzen zur Reduzierung der Kabelbaumquerschnitte finden sich auch in den Forderungen wieder, die Kupferadem in den Kabeln mit höheren Stromstärken zu belasten; dadurch erhöht sich die Temperaturbelastung aufgrund verstärkter Ohmscher Wärmeentwicklung für die Kabelisolierung und auch für die Kabelsatz-Klebebänder. Somit gilt diese verschärfte Forderung nach verbesserter Temperaturbeständigkeit selbst in Bereichen, die nicht in unmittelbarer Nähe des Motorblocks liegen.

Die mangelnden Dämpfungseigenschaften von mit PVC-Folienklebebändern umwickelten Kabelsträngen erfordern an exponierten Stellen den zusätzlichen Einsatz von dämpfenden Materialien wie Schaumstoff, Filz, Velours oder ähnlichem, was sowohl vom Materialeinsatz als auch von dem Verarbeitungsaufwand einen zusätzlichen Kostenblock darstellt.

Nicht zu vergessen ist das generelle Bestreben unter ökologischen und toxikologischen Gesichtspunkten, PVC als Werkstoff im Fahrzeug völlig zu eliminieren - neben den Problemen bei der Verwertung von PVC-haltigem Kunststoff erschwert Weich-PVC die Vorgabe, Ausgasungen aus Materialien besonders im Fahrzeuginnenraum (bekannt als ,Fogging-Wert' nach DIN 75 201 gemessen) drastisch zu senken - einige der langsam ausdünstenden Weichmacher sind wie das DOP (Dioctylphthalat) nicht nur mit einer merklichen Flüchtigkeit behaftet, sondern auch als toxikologisch bedenklich bekannt.

PVC-Folienklebebänder erfüllen hinsichtlich ihrer geringen Dicke besonders den Anspruch bezüglich geringem Raumbedarf, sie lassen sich jedoch nur mit Einschränkungen leicht und angenehm verarbeiten. Manuelles Ablängen von der Rolle führt leicht zu einem Überdehnen der PVC-Folie und einer verwellten Abrißkante, die eine sichere Endverklebung erschwert. Weiterhin ist die glatte Folienoberfläche unter Akkordbedingungen bei der manuellen Kabelwicklung nicht sehr haut- und fingerfreundlich.

Völlig ungeeignet sind dagegen PVC-Klebebänder in Hinblick auf die Geräuschdämpfung; derart hergestellte Kabelsätze weisen in Geräuschdämpfungsprüfungen, wie sie beispielsweise unter dem Punkt "Geräuschmessung" in der BMW-Norm GS 95008-3 aus Mai 2000 beschrieben wird, keinen meßbaren Effekt auf.

Bei dieser Meßmethode wird ein definierter Stahlstab mit dem Prüfling umwickelt und unter festgelegten Bedingungen auf ein Aluminiumblech fallen gelassen. Das Schallergebnis wird mittels eines über der Prüfanordnung befindlichen Mikrofons in einem Frequenzbereich von 20 bis 12.500 Hz erfaßt und aufgezeichnet
Die Dämpfung wird als Differenz zwischen Nullwert mit nicht-umwickeltem Stahlstab sowie dem jeweiligen Meßwert in dB(A) angegeben.

In WO 97/37839 wird ein Folienklebeband beschrieben, welches durch eine strukturierte Oberfläche mit Rillen und Riffeln eine Geräuschdämpfung aufweisen soll. Im Vergleich zu den glatten Standard-PVC-Klebebändern wird jedoch nach der oben beschriebenen Meßmethode keine signifikante Geräuschdämpfung erzielt

Gewebe-Klebebänder, besonders auf Basis von Polyester- oder Zellwollgamen, sind zwar mit ca. 0,3 mm doppelt bis dreifach so dick wie Standard-PVC-Folienklebebänder mit einer Dicke von überwiegend 0,1 bis 0,15 mm (Bestimmung aller Dickenwerte nach AFERA 4006 beziehungsweise ASTM D 1000 mit einem Taster von 10 mm Durchmesser und einem Auflagedruck von 51 kPA) weisen aber trotzdem nur minimale Geräuschdämpfungseigenschaften auf.

Um meß- und hörbare Verbesserungen zu erreichen, werden daher besonders an kritischen Stellen Flettschläuche, selbstklebend ausgerüstete Schaumstoffe oder dicke Textilien wie Velours u.ä. eingesetzt. Hierbei handelt es sich zumeist um kostspielige Sonderteile für den Kabelsatz oder aufwendige Mehrschichtsysteme, die arbeitsintensiv zusätzlich zu der normalen Kabelbandagierung aufgebracht werden müssen.

In DE 199 10 730 A1 wird ein derartiger Laminatträger beschrieben, der aus Velours oder Schaumstoff und einem Vlies besteht, welche mittels eines doppelseitigen Klebebandes oder mit einem Schmelzkleber adhäsiv verbunden sind.

In DE 299 16 616 U1 wird ein Schichtaufbau beschrieben aus einem Velours-Polyamidgewebe, zusätzlich fest verbunden mit einer Kunststoffbeschichtung beispielsweise aus Polyacrylat oder Urethan.

EP 0 886 357 A2 beschreibt eine dreilagige Schutzummantelung aus einem - Spinnfaservlies, einem PET-Gewirke sowie einem Schaumstoff- oder Filzstreifen, die zusammenkaschiert sind, wobei die Schutzummantelung zusätzlich noch sehr aufwendig mit Klebestreifen und Klettverschlußsystemen zumindest partiell versehen ist.

In EP 1 000 992 A1 wird ein gelochtes BaumwoUe-Vlies mit einer 10 bis 45 µm dicken Polyethylenbeschichtung sowie einer zusätzlichen Releasebeschichtung beschrieben.

Alle genannten Systeme ergeben zwar mit 10 bis 20 dB(A) ausgezeichnete Geräuschdämpfungen, sind jedoch wirtschaftlich nicht vertretbar oder nur in besonderen Problemzonen einsetzbar und weisen Dicken von meist 0,5 mm, häufig sogar größer 1,0 mm auf und erhöhen deshalb den Raumbedarf damit ausgerüsteter Kabelbäume erheblich, was die Einsatzmöglichkeiten sehr stark einschränkt.

Um bereits bei der normalen Kabelbandagierung als Spiralwicklung eine ausgeprägte Geräuschdämpfung zu erzielen, werden seit einiger Zeit Vliesträger in Klebebändern eingesetzt:

So beschreibt die DE-G 94 01 037 ein Klebeband mit einem bandförmigen, textilen Träger, der aus einem Nähvlies besteht, das seinerseits aus einer Vielzahl parallel zueinander laufender, eingenähter Nähte gebildet wird. Das beschriebene Klebeband zeigt bei seiner Verwendung zur Kabelbaumbandagierung aufgrund seiner speziellen Ausführung Geräuschdämmungseigenschaften.
Das hier vorgeschlagene Vlies soll bei einem Flächengewicht von 50 bis 200 g/m² eine Dicke von 150 bis 400 µm aufweisen.

Die DE 44 42 092 C1 beschreibt ein Klebeband auf Nähvliesbasis, das auf der Trägerrückseite beschichtet ist. Neben dem in der genannten Schrift erwähnten Nähvlies gibt es weitere Träger, die in Klebebändern zur Kabelbaumbandagierung eingesetzt werden.
Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf sogenannten Kunit- beziehungsweise Multiknitvliesen.
In allen drei Dokumenten werden dabei Vliese eingesetzt, die ein Flächengewicht von ungefähr 100 g/m² aufweisen, wie man den Beispielen entnehmen kann. Ein derartig dickes Vlies ist erforderlich, um die gestellten Aufgaben sicher erfüllen zu können.

Aus der DE 195 23 494 C1 ist die Verwendung eines Klebebandes mit einem Träger aus Vliesmaterial zum Bandagieren von Kabelbäumen bekannt, das einseitig mit einem Kleber beschichtet ist. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist.
Das Vlies ist in vorteilhaften Ausführungsform beschrieben, es weist dann ein Flächengewicht von 60 bis 100 g/m², vorzugsweise 80 g/m², und eine Dicke von 400 bis 600 µm auf.

Mit der DE 298 04 431 U1 wird ebenfalls die Verwendung eines Klebebandes mit einem Träger aus Vliesmaterial zum Bandagieren von Kabelbäumen offenbart, wobei das vorgeschlagene Spinnvlies aus Polyester besteht. Das Vlies soll ein Flächengewicht von 60 bis 100 g/m² aufweisen.

Aus der DE 298 19 014 U1 sind Klebebänder auf Basis eines mit Luft- und/oder Wasserstrahlen verfestigten Vliesen bekannt. Das Klebeband besteht aus einem Träger mit einem Flächengewicht von 60 bis 120 g/m², die Menge der Kleberbeschichtung ist nicht angesprochen.

Aus der DE 199 23 399 ist ein Klebeband mit einem bandförmigen Träger aus Vliesmaterial bekannt, das zumindest einseitig mit einem Kleber beschichtet ist, wobei das Vlies ein Stapelfaservlies darstellt, das durch mechanische Bearbeitung verfestigt oder naßgelegt wird. Zwischen 2% und 50% der Fasern des Vlieses sind Schmelzfasem, und zwar solche aus Homo-, Copolymer- oder Bikomponentenfasern mit einem niedrigeren Erweichungs- oder Schmelzpunkt.
Beispielhaft erwähnt ist, daß die Schmelzfasem des Vlieses aus Polypropylen, Polyethylen, Polyamid, Polyester oder Copolymeren bestehen.
Folgende Eigenschaften sollte dabei das offenbarte Vlies haben:
- ein Vliesgewicht von 60 bis 400 g/m², insbesondere 200 g/m²
- eine Vliesdicke von 100 µm bis 3000 µm, insbesondere 500 bis 1000 µm
Die Menge der Kleberbeschichtung ist nicht angesprochen.

Ein weiteres Klebeband mit einem bandförmigen Träger aus Vliesmaterial ist in der DE 199 37 446 offenbart. Das Klebeband ist zumindest einseitig mit einem Kleber beschichtet, wobei das Vlies ein Stapelfaservlies darstellt, das durch mechanische Bearbeitung vorverfestigt oder naßgelegt wird. Hier erfolgt die weitere Verfestigung des Stapelfaservlieses durch Zugabe von Bindemitteln, wie zum Beispiel Pulver, Folien, Gitternetze, Bindefasem. Die Bindemittel können in Wasser oder organischen Lösemittel gelöst sein und/oder als Dispersion vorliegen.
Vorzugsweise kommen die Bindemittel als Bindedispersion wie Elastomere oder wie Duroplaste in Form von Phenol- oder Melaminharzdispersionen, als Dispersion natürlicher oder synthetischer Kautschuke oder als Dispersion von Thermoplasten wie Acrylate, Vinylacetate, Polyurethane, Styrol-Butadien-Systeme, PVC sowie deren Copolymere zum Einsatz.

Folgende Eigenschaften sollte dabei das offenbarte Vlies haben:
- ein Vliesgewicht von 50 bis 500 g/m², insbesondere 80 bis 200 g/m²
- eine Vliesdicke von 100 µm bis 3000 µm, insbesondere 200 bis 1000 µm Die Menge der Kleberbeschichtung ist nicht angesprochen.

In WO 99/24518 A1 wird ein Klebeband beschrieben, wobei das Trägermaterial ein Vlies ist, das erst durch die spezifische Auswahl von Fasern oder Filamenten mit einer Feinheit von größer 15 denier sowie durch eine zusätzlich aufextrudierte Folienschicht eine Eignung für die Verwendung von Klebebändern findet.
Es vermögen nur Vliese die dort gestellten Aufgaben zu erfüllen, die ein Flächengewicht von 34 bis 678 g/m² zeigen.

Mit der DE 197 32 958 A1 ist ein Klebeband zum Ummanteln von langgestrecktem Gut, wie Kabelsätzen oder Kunststoffprofilen, offenbart mit einem durch zwei seitliche Kanten begrenzten bandförmigen Träger, der mindestens auf einer Seite mit einer selbstklebenden Klebeschicht versehen ist, die aus einem Haftklebstoff besteht. Der Haftklebstoff weist eine derartige chemische Zusammensetzung auf, daß sich bei Vorhandensein eines leichten Anpreßdruckes auf zwei aufeinander liegende Klebeschichten unter Auflösung der Grenzflächen und vollständiger Koaleszenz der Klebeschichten eine homogene Haftklebstoff-Masse bildet.
Des weiteren umfaßt die hier dargestellte Erfindung ein Verfahren zum Ummanteln des langgestreckten Gutes. Danach wird das langgestreckte Gut in Längsrichtung im Bereich eines Abschnittes des Klebebandes auf einer mit einer selbstklebenden Klebeschicht versehenen Seite eines bandförmigen Trägers des Klebebandes positioniert und danach das Klebeband derart verklebt, daß mindestens zwei Klebebereiche des bandförmigen Trägers auf der mit der Klebeschicht versehenen Seite derart gegeneinander geklebt werden, daß unter Auflösung von Grenzflächen der Klebeschicht eine homogene Masse entsteht.
Es ergibt sich somit ein aus dem ummantelten Gut herausragendes Fähnchen, das gerade bei den eng bemessenen Platzverhältnissen im Automobilbau äußert unerwünscht ist und das Gefährdungspotential beinhaltet, daß beim Durchziehen des Kabelsatzes durch begrenzte Öffnungen oder Durchführungen zum Beispiel in der Karosserie die Ummantelung hängen bleibt und abreißt, zumindest aber die Umhüllung beschädigt. Dies gilt es zu vermeiden.

Weiterhin wird stets betont, daß nur Vliese geeignet sind, die mit einem Flächengewicht von größer 100 g/m² versehen sind.

Tatsächlich werden in der Praxis Vliesträger mit Flächengewichten von 80 bis 100 g/m² und deutlich aufwärts sowie Dicken von 0,3 mm und mehr eingesetzt, denn dann tritt bei derartigen Trägern eine merkliche Geräuschdämpfung auf, zumal bekannt ist, daß derartige Eigenschaften von der Masse (Gewicht) und dem Volumen (Dicke) der Schutzumhüllung abhängig sind. Je schwerer und dicker der Träger ist, desto größer ist die zu erzielende Geräuschdämpfung.

Mit derartigen Klebebändern werden Geräuschreduzierungen meist im Bereich von 3 bis 10 dB(A), bei dicken Vliesträgem, wie dem ca. 1 mm PES-Malivlies von tesa 51606, sogar 15 dB(A) und mehr erzielt (jeweils gemessen nach BMW-Norm GS 95008-3 aus Mai 2000).

Klebebänder mit so dicken und schweren Trägermaterialien tragen gerade bei der überlappenden Wicklung jedoch merklich auf und vergrößern den Raumanspruch der Kabelbäume. Des weiteren verhindern sie eine effiziente Kabelsatzherstellung, da sie aufgrund ihrer Dicke nur in kurzen Lauflängen auf Rollen gewickelt werden können, welche jedoch für die Verarbeitung an Wickelbrettern nur gewisse maximale Durchmesser (häufig ca. 100 mm) aufweisen dürfen.
Alternativ vorgefertigt und abgelängt auf Trennpapier dargebotene Abschnitte erfordern erhöhten manuellen Aufwand zur Entfernung des Trennpapiers, welches anschließend entsorgt werden muß.

Die EP 1 114 853 A1 offenbart ein Klebeband aus einem Träger mit einem Flächengewicht von kleiner 60 g/m², die Menge der Kleberbeschichtung beträgt 90 bis 150 g/m².

Der vorliegenden Erfindung liegt die Aufgabe zugrunde, ein Klebeband zur Verfügung zu stellen, das besonders die einfache, preiswerte und schnelle Ummantelung von langgestrecktem Gut ermöglicht, das gute Dämpfungseigenschaften zeigt, das eine geringe Dicke und ein geringes Flächengewicht aufweist, um auch auf engem Raum zur Anwendung zu kommen, so daß die Nachteile des Standes der Technik nicht oder zumindest nicht in dem Umfang auftreten.

Gelöst wird diese Aufgabe durch ein Klebeband, wie es im Hauptanspruch niedergelegt ist. Gegenstand der Unteransprüche sind dabei vorteilhafte Weiterbildungen des Klebebands sowie bevorzugte Anwendungen des erfindungsgemäßen Klebebands.

Demgemäß betrifft die Erfindung ein Klebeband zum Ummanteln von langgestrecktem Gut, wie insbesondere Kabelsätzen, mit einem Träger auf Vliesbasis, der zumindest einseitig mit einer Klebebeschichtung versehen ist und der mechanisch, thermisch oder chemisch verfestigt ist, wobei der Träger ein Flächengewicht von 20 bis 50 g/m² aufweist.
Die Kleberbeschichtung wird mit 25 bis 80 g/m² drucklos oder indirekt auf dem Vliesträger aufgebracht und anschließend physikalisch oder chemisch vernetzt.
Das Klebeband erzielt dabei eine Geräuschdämpfung von 3 bis 10 dB(A), insbesondere von 4 bis 6 dB(A) (gemessen nach BMW-Norm GS 95008-3 aus Mai 2000).

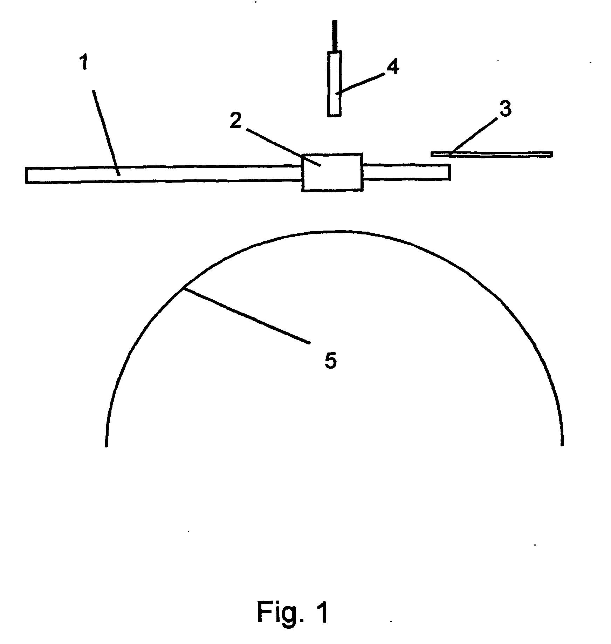

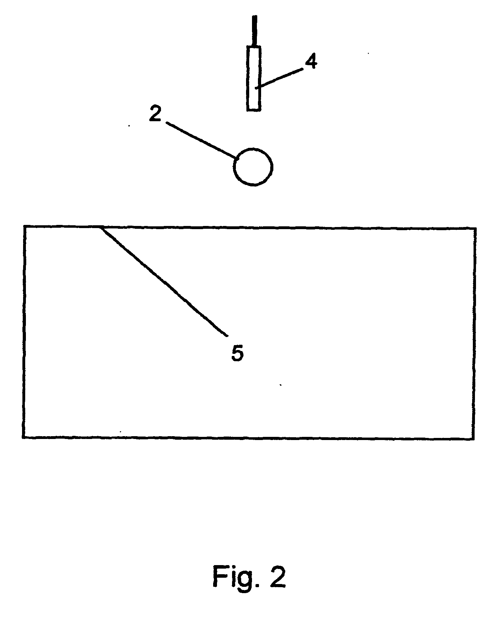

Im folgenden soll nochmals in Verbindung mit den Figuren 1 und 2 das Meßverfahren nach der BMW-Norm GS 95008-3 aus Mai 2000 offengelegt werden.

Es zeigen
- Figur 1: den Aufbau der Meßvorrichtung in der seitlichen Ansicht und
- Figur 2: denselben Aufbau in der horizontalen Ansicht.

Bei dieser Meßmethode wird ein definierter Stahlstab 1 mit 8 mm Durchmesser derartig mit dem Prüfling 2 - sprich Klebeband - umwickelt, daß sich Hebellängen von 220 mm und 150 mm ergeben. Der umwickelte Stahlstab 1 wird bis zur Arretierung 3 auf die Fallhöhe und mit einem Gewicht von ca. 16 g auf ein Aluminiumblech 5 fallen gelassen. Das Aluminiumblech 5, das im unverformten Zustand 350 x 190 x 0,3 [mm] mißt, wird halbtonnenförmig unter dem Prüfling 2 angeordnet, so daß sich eine Weite von 290 mm ergibt.
Das Gesamtschallergebnis wird mittels eines über der Prüfanordnung befindlichen Mikrofons 4 in einem Frequenzbereich von beispielsweise 20 bis 12.500 Hz mit einem handelsüblichen Schallmeßgerät, beispielsweise Typ 2226 der Fa. Bruel & Kjaer erfaßt und aufgezeichnet. Für das menschliche Ohr als besonders relevant sind Frequenzen im Bereich von 2.000 bis 5.000 Hz.

Die Dämpfung wird als Differenz zwischen Nullwert mit nicht-umwickeltem Stahlstab sowie dem jeweiligen Meßwert in dB(A) angegeben.

Überraschend und für den Fachmann unerwartet können auch leichte, dünne Vliesklebebänder eine Geräuschdämpfung von 3 bis 10 dB(A), insbesondere von 4 bis 6 dB(A) erzielen bei geeigneter Ausprägung.

Diese bei einem geringen Flächengewicht des Vliesträger von 20 bis 50 g/m², erstaunliche Eigenschaft erlaubt es, ein neuartiges Kabelwickelband herzustellen, welches nicht nur gering aufträgt wie PVC-Folientapes, sondern auch gegenüber bisherigen Wickelbändern auf Folien- oder Gewebebasis eine deutliche Gewichtserspamis erbringt und zusätzlich den erhöhten Anforderungen bezüglich verbesserter Geräuschdämpfung Rechnung trägt.

Als Trägermaterial für das Klebeband können alle bekannten Vliese verwendet werden, wobei unter "Vlies" zumindest textile Flächengebilde gemäß EN 29092 (1988) sowie Nähwirkvliese und ähnliche Systeme zu verstehen sind.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, eine erfindungsgemäße Eindeckung und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2 % und 50 % der Fasern des Vlieses Schmelzfasem sind, insbesondere zwischen 5 % und 40 % der Fasern des Vlieses.
Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vemähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers läßt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die erfindungsgemäße Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gittemetz oder in Form von Bindefasem. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschbom, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser inline oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl, aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfsstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann, ebenso zeigt somit auch die Eindeckung einen sehr geringen Foggingwert.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasem die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt

Als Ausgangsmaterialien für den textilen Träger sind insbesondere Polyester-, Polypropylen-, Viskose- oder Baumwollfasem vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Eine Schwerentflammbarkeit der Klebebänder läßt sich erzielen, indem dem Vliesträger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Das Trägermaterial wird zur Herstellung von Klebebändern einseitig vollflächig oder partiell mit Klebemasse beschichtet, wobei die Beschichtungstechnologien sowie die Klebemassen dem Stand der Technik entsprechen. Als Klebemassen können prinzipiell verschiedene Polymersysteme gewählt werden, wobei sich besonders Natur- oder Synthesekautschuk- sowie Acrylatsysteme als vorteilhaft erwiesen haben; Silikonklebemassen und andere bekannte Selbstklebemassen können ebenfalls für derartige Anwendungen zum Einsatz kommen, wenn ihre Klebeigenschaften, Temperaturbeständigkeiten, Verträglichkeiten mit dem Kabelisolationsmaterial etc. den Anforderungen entsprechen.

Insbesondere vorteilhaft für den erfindungsgemäßen Gedanken ist ein foggingfreies Selbstklebeband, umfassend einen foggingfreien Träger, auf den zumindest einseitig eine foggingfreie, druckempfindliche Klebemasse aufgetragen ist.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der deutschen Patentanmeldung DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestem, insbesondere Vinylacetat, Vinylalkoholen und/oder Vinylethern eingesetzt.

Der Restlösungsmittel-Gehalt sollte unter 1 Gew.-% betragen.

Besonders aufgrund des geringen Flächengewichtes und der geringen Dicken des Trägermaterials eignen sich direkte Beschichtungsverfahren, die nahezu drucklos und gegebenenfalls berührungslos die Klebemasse auf den Vliesstoff auflegen, oder aber indirekte Beschichtungsverfahren.

Dadurch wird nicht nur verhindert, daß Klebemasse in den textilen Träger hineingedrückt wird und somit für die späteren Verklebungsanforderungen nutzlos vergeudet wäre, sondern auch erreicht, daß die offene, textile Struktur für gute Dämpfungseigenschaften nicht oder nur minimal verändert wird.

Zu nennen wären hier beispielweise neben der Transferierung der Klebemasse von Silikontrennpapier auch die Übertragung über andere temporäre Transfermedien wie Gurtbänder u.ä. sowie drucklose Kleberbeschichtung mittels Extrusionsdüsen u. ä., bei denen ein fertiger Film aus Klebemasse auf dem Vliesträger aufgelegt wird. Eine gegebenenfalls notwendige Verbesserung der Verankerung der Klebemasse auf dem Träger kann nach erfolgter Kleberbeschichtung durch Temperatur- und/oder Druckanwendung zum Beispiel in Kaschierstationen erreicht werden.

Ein mögliches indirektes Verfahren zur Herstellung eines mit einer porösen Klebstoffschicht beschichteten flexiblen, flächigen Trägers wird in der DE 40 32 776 A1 offenbart. Danach
a) wird eine fließfähige Klebstoffmasse auf einen Zwischenträger aufgetragen, der folgende Eigenschaften aufweist
   - er hat eine unter dem Licht- oder Elektronenmikroskop erkennbare gewellte, gefältelte zerklüftete oder gefurchte Oberfläche
   - die Klebstoffmasse ist von seiner Oberfläche leicht ablösbar,
   - er ist im wesentlichen luftundurchlässig,
b) werden die nach der Beschichtung des Zwischenträgers zwischen der Klebstoffmasse und dem Zwischenträger entstehenden mikroskopischen Luft- oder Lösungsmitteleinschlüsse durch Temperaturerhöhung ausgedehnt, bis die Oberfläche der Klebstoffmasse aufplatzt, und
c) wird die Klebstoffmasse anschließend von dem Zwischenträger auf den endgültigen Träger übertragen.

Anders als zu der in der DE 40 32 776 A1 angestrebten porösen Kleberbeschichtung ist für den Erfindungsgegenstand eine möglichst homogene, glatte, luftfreie und undurchlässige Kleberbeschichtung von Vorteil. Wird anstelle der oben beschriebenen strukturierten Oberfläche jedoch eine glatte und homogene Oberfläche des Zwischenträgers gewählt, lassen sich diese Anforderungen erfüllen.

Der Grundkörper für die Zwischenträger kann aus allen gängigen Materialien für solche Zwecke gewählt werden. Besonders vorteilhaft sind gewebte Gurtbänder aus Glasfaser, Polyester, Polyamid oder Nomex®, einem Fasermaterial der Firma DuPont. Aber auch Gummitücher, Kunststoffbänder und dergleichen haben sich als günstig herausgestellt. Es ist, wenn Gewebebänder gewählt werden, günstig, solche zu verwenden, die schon mit einer im wesentlichen unstrukturierten Oberflächenbeschichtung aus Kunststoff versehen sind. Diese letztere Beschichtung fördert die Haftung und Gleichmäßigkeit der eigentlichen Oberflächenbeschichtung auf dem Grundkörper. Die Oberflächenbeschichtung selbst stellt das gewünschte leichte Übertragen der Klebestoffmasse von dem Zwischenträger auf den endgültigen Träger sicher. Vorteilhaft ist diese Oberfläche des Zwischenträgers mit einer antiadhäsiven Schicht beispielsweise aus vernetztem Silikonkautschuk oder Fluorpolymeren wie Teflon® beschichtet.

Als besonders vorteilhaft erweist sich eine derartige Beschichtung, wenn der erreichte Zustand mit chemischen oder physikalischen Methoden quasi eingefroren und ein "kaltes Fließen" der Klebemasse in den Vliesträger durch Vernetzung verhindert wird. So sind beispielsweise die UV-vernetzbaren Acrylat-Hotmelts, wie sie von der BASF unter der Handelsbezeichnung acResin© angeboten werden, besonders für derartige Anforderungen geeignet: nach der Beschichtung erfolgt eine dreidimensionale Vernetzung mittels UV-Strahlung. Je nach gewähltem Klebemassetyp können jedoch auch andere Vernetzungsarten vorteilhaft zum Einsatz kommen wie die chemische Vernetzung, thermisch initiierte sowie die strahlenchemische Vernetzung mittels Elektronenstrahlen oder andere bekannte Systeme.

In einer weiteren bevorzugten Ausführungsform der Erfindung wird die Kleberbeschichtung mit 25 bis 60 g/m², insbesondere 30 bis 50 g/m², drucklos oder indirekt auf dem Vliesträger aufgebracht und anschließend physikalisch oder chemisch vernetzt.

Durch die Kombination der beschriebenen spezifischen Beschichtung des Trägers mit Klebemasse sowie den erfindungsgemäßen Trägermaterialien wird ein Klebeband als Endprodukt erhalten, welches im Gesamtflächengewicht maximal 160 g/m², insbesondere aber weniger als 120 g/m², ganz besonders aber bis zu 100 g/m² wiegt.
Damit läßt sich gegenüber den bisher bekannten Klebebändern eine merkliche Gewichtsreduzierung erreichen, da diese marktbekannten Wickelbänder nahezu ausnahmslos mehr als 160 g/m², überwiegend sogar 180 bis 200 g/m² und darüber hinaus wiegen, unabhängig ob es sich um PVC-Folienklebebänder oder solche auf Basis Gewebe oder Vlies handelt.
Da speziell in der Automobilindustrie erhebliche Anstrengungen unternommen werden, an allen möglichen Stellen Gewicht einzusparen, um beispielweise den Kraftstoffverbrauch zu reduzieren und damit den administrativen Vorgaben bezüglich Reduzierung der Kohlendioxidemission gerecht zu werden, bietet ein derartiges Klebeband einen weiteren, zusätzlichen Vorteil, der sich mit den bisher bekannten Klebebändern nicht erreichen läßt.

Besonders vorteilhaft läßt sich das erfindungsgemäße Klebeband zur spiralförmigen Ummantelung eines langgestreckten Gutes, wie insbesondere ein Kabelsatz, verwenden. Hier kommen alle Vorteile des Klebebands voll zum Tragen.

Die erfindungsgemäßen Klebebänder weisen gegenüber Weich-PVC höhere Kurzzeit- und Dauertemperaturbeständigkeiten auf. Verbesserte Abrieb- und Scheuerfestigkeiten sowie deutlich höhere Geräuschdämpfung prädestinieren diese Klebebänder für den Einsatz in bestimmten Karosseriebereichen.

Geschätzt wird auch die gute manuelle Verarbeitbarkeit bei der Kabelbaumherstellung. Eine leichte Handeinreißbarkeit schützt unter Akkordbedingungen vor Überanstrengungen der Gelenke, Muskeln und Sehnen der zumeist weiblichen Arbeitskräfte, eine glatte Rißkante ohne Überdehnung des Trägers im Endbereich erlaubt einen guten, sicheren Wickelabschluß ohne Gefahr des Abflaggens, die weiche, textile Oberfläche hat sich als hautfreundlich für die manuelle Verarbeitung erwiesen.

Derartige Klebebänder sind nicht nur per se PVC- oder halogenfrei und werden somit den ökologischen Anforderungen gerecht, sondern durch die spezielle Trägerkonstruktion aus einer Vielzahl von Einzelfasern ist auch für die geforderte Flexibilität des Trägers kein Einsatz von Weichmachern u.ä. erforderlich - somit lassen sich auf dieser Basis günstigere Foggingwerte im Vergleich zu PVC-Folienklebebändern erreichen, nämlich daß diese Vliesträger keine oder zumindest deutlich verringerte Ausgasungen beitragen.

Weiterhin umfaßt somit der Erfindungsgedanke auch ein langgestrecktes Gut, wie insbesondere einen Kabelbaum, ummantelt mit einem erfindungsgemäßen Klebeband.

Das erfindungsgemäße Klebeband wird nachfolgend in bevorzugter Ausführung anhand mehrerer Beispiele beschrieben, ohne damit die Erfindung in irgendeiner Weise beschränken zu wollen. Des weiteren ist ein Vergleichsbeispiel aufgeführt, in dem ein untaugliches Klebeband dargestellt ist.

### Beispiel 1

Als Träger wird ein wasserstrahlverfestigtes Vlies aus 100% Polyesterfasem der Feinheit 1,7 dtex mit einem Flächengewicht von 50 g/m² und einer Dicke von 0,4 mm gewählt, welches mit einer Standardklebemasse für Kabelsatzanwendungen, bestehend aus

| | |
|---|---|
| 40 Gew.-% | Naturkautschuk, |
| 48 Gew.-% | Harzen und Weichmachern, |
| 9 Gew.-% | Füllstoff Zinkoxid sowie |
| 3 Gew.-% | Ruß und Alterungsschutzmitteln, |

in indirekter Beschichtung über Silikontrennpapier mit 35 g/m² beschichtet wird. Zur Stabilisierung des Systems erfolgt eine Vernetzung mit Elektronenstrahlung mit einer Dosis von 70 kGy bei einer Beschleunigungsspannung von 200 kV.

Bei der Geräuschdämpfungsmessung nach BMW-Norm GS 95008-3 ergibt sich für ein derartig hergestelltes Wickelband ein Dämpfungswert von 4,5 dB(A).

### Beispiel 2

Ein thermisch verfestigtes Vlies aus 100 % Polyesterfasern, wie es von der Fa. Sandler unter der Bezeichnung "Sawabond 4342" mit einem Flächengewicht von 35 g/m² erhältlich ist, wird mit 40 g/m² im Transferverfahren über ein silikonisiertes Gurtband mit dem Acrylathotmelt acResin 258 der BASF beschichtet und inline mit einer UV-Dosis von 30 mJ/cm² vernetzt.
Bei der Geräuschdämpfungsmessung wird eine Dämpfung um 5 dB(A) gegenüber dem nicht-umwickelten Stahlstab erreicht.

### Gegenbeispiel

Ein langjährig bewährtes Wickelband auf Basis einer Weich-PVC-Folie mit einem Folienflächengewicht von 150 g/m² und einer Dicke von 0,11 mm läßt in der Dämpfungsmessung gegenüber dem nicht-umwickelten Stahlstab keinen merklichen Dämpfungseffekt erkennen.

## Patentansprüche

1. Klebeband zum Ummanteln von langgestrecktem Gut, wie insbesondere Kabelsätzen, mit einem Träger auf Vliesbasis, der zumindest einseitig mit einer Klebebeschichtung versehen ist und der mechanisch, thermisch oder chemisch verfestigt ist, wobei der Träger ein Flächengewicht von 20 bis 50 g/m², aufweist,
**dadurch gekennzeichnet, dass** die Kleberbeschichtung mit 25 bis 80 g/m² drucklos oder indirekt auf dem Vliesträger aufgebracht und anschließend physikalisch oder chemisch vernetzt wird und das Klebeband eine Geräuschdämpfung von 3 bis 10 dB(A), insbesondere von 4 bis 6 dB(A), erzielt (gemessen nach BMW-Norm GS 95008-3 aus Mai 2000).

2. Klebeband nach Anspruch 1, **dadurch gekennzeichnet, dass** das Vlies ein Stapelfaservlies darstellt, das durch mechanische Bearbeitung verfestigt, oder naßgelegt wird, wobei das Stapelfaservlies durch Zugabe von Bindemitteln weiter verfestigt ist und/oder wobei zwischen 2% und 50% der Fasern des Vlieses Schmelzfasern sind.

3. Klebeband nach den Ansprüchen 1 und 2, **dadurch gekennzeichnet, dass** das Vlies ein Spinnvlies oder Meltblown-Vlies insbesondere aus Polypropylen oder Polyester ist, das mit Hilfe eines Kalanders thermisch verfestigt und geprägt ist.

4. Klebeband nach den Ansprüchen 1 bis 3, **dadurch gekennzeichnet, dass** das Vlies ein solches ist, das durch ein Übernähen mit separaten Fäden oder durch ein Vermaschen verfestigt sind.

5. Klebeband nach den Ansprüchen 1 bis 4, **dadurch gekennzeichnet, dass** die Kleberbeschichtung mit 25 bis 60 g/m², insbesondere 30 bis 50 g/m², drucklos oder indirekt auf dem Vliesträger aufgebracht und anschließend physikalisch oder chemisch vernetzt wird.

6. Klebeband nach den Ansprüchen 1 bis 5, **dadurch gekennzeichnet, dass** das Gesamtflächengewicht des Klebebandes maximal 160 g/m², insbesondere weniger als 130 g/m², ganz besonders aber bis 100 g/m² beträgt.

7. Verwendung eines Klebebands nach zumindest einem der vorherigen Ansprüche zur spiralförmigen Ummantelung eines langgestreckten Gutes, wie insbesondere ein Kabelsatz.

8. Langgestrecktes Gut, wie insbesondere ein Kabelsatz, ummantelt mit einem Klebeband nach zumindest einem der vorherigen Ansprüche.

## Claims

1. Adhesive tape for wrapping elongate product, especially cable harnesses, having a web-based backing which is provided on at least one side with an adhesive coating and is mechanically, thermally or chemically consolidated, said backing having a basis weight of from 20 to 50 g/m², **characterized in that** the adhesive coating is applied to the web backing pressurelessly or indirectly at from 25 to 80 g/m², and then is physically or chemically crosslinked, and the adhesive tape achieves a noise attenuation of from 3 to 10 dB(A), in particular from 4 to 6 dB(A) (measured in accordance with BMW Standard GS 95008-3 from May 2000).

2. Adhesive tape according to Claim 1, **characterized in that** the web constitutes a staple fibre web which is consolidated mechanically or wet-laid, the staple fibre web being further consolidated by the addition of binders and/or between 2% and 50% of the fibres of the web being fusible fibres.

3. Adhesive tape according to Claims 1 and 2, **characterized in that** the web is a spunbonded web or meltblown web made in particular of polypropylene or polyester which is thermally consolidated and embossed with the aid of a calender.

4. Adhesive tape according to Claims 1 to 3, **characterized in that** the web is consolidated by overstitching with separate threads or by interlooping.

5. Adhesive tape according to Claims 1 to 4, **characterized in that** the adhesive coating is applied to the web backing pressurelessly or indirectly at from 25 to 60 g/m², in particular from 30 to 50 g/m², and then is physically or chemically crosslinked.

6. Adhesive tape according to Claims 1 to 5, **characterized in that** the overall basis weight of the adhesive tape is not more than 160 g/m², in particular less than 130 g/m², very particularly, however, up to 100 g/m².

7. Use of adhesive tape according to at least one of the preceding claims for the spiral wrapping of an elongate product, such as a cable harness in particular.

8. Elongate product, especially a cable harness, wrapped with Adhesive tape according to at least one of the preceding claims.

## Revendications

1. Ruban adhésif pour envelopper un produit allongé, en particulier des jeux de câbles, qui présente un support à base de non-tissé qui a été doté au moins sur une face d'un revêtement adhésif et qui a été solidifié mécaniquement, thermiquement ou chimiquement, le support présentant un poids par unité de surface de 20 à 50 g/m²,
**caractérisé en ce que** le revêtement d'adhésif est appliqué à raison de 25 à 80 g/m² sans pression ou indirectement sur le support de non-tissé et est ensuite réticulé physiquement ou chimiquement, et **en ce que** le ruban adhésif permet d'obtenir une atténuation du bruit de 3 à 10 dB(A) et en particulier de 4 à 6 dB(A) (que l'on mesure selon la norme BMW GS 95008-3 de mai 2000).

2. Ruban adhésif selon la revendication 1, **caractérisé en ce que** le non-tissé est un non-tissé de fibres empilées qui a été solidifié par traitement mécanique ou posé en conditions humides, le non-tissé de fibres empilées étant encore solidifié par addition de liants et/ou entre 2% et 50% des fibres du non-tissé sont des fibres fusibles.

3. Ruban adhésif selon les revendications 1 et 2, **caractérisé en ce que** le non-tissé est un non-tissé filé ou un non-tissé soufflé à l'état fondu, en particulier en polypropylène ou en polyester, qui a été solidifié thermiquement et structuré à l'aide d'une calandreuse.

4. Ruban adhésif selon les revendications 1 à 3, **caractérisé en ce que** le non-tissé est un non-tissé qui a été solidifié par surfilage à l'aide de fils séparés ou par maillage.

5. Ruban adhésif selon les revendications 1 à 4, **caractérisé en ce que** le revêtement d'adhésif est appliqué à raison de 25 à 60 g/m² et en particulier de 30 à 50 g/m² sans pression ou indirectement sur le support de non-tissé et est ensuite réticulé physiquement ou chimiquement.

6. Ruban adhésif selon les revendications 1 à 5, **caractérisé en ce que** le poids total par unité de surface du ruban adhésif est d'au plus 160 g/m², en particulier inférieur à 130 g/m² et tout particulièrement d'au plus 100 g/m².

7. Utilisation d'un ruban adhésif selon au moins l'une des revendications précédentes pour emballer en spirale un produit allongé, en particulier un jeu de câbles.

8. Produit allongé, en particulier jeu de câbles, enveloppés d'un ruban adhésif selon au moins l'une des revendications précédentes.
